# FASCICULE DE BREVET EUROPEEN

(11) **EP 3 781 378 B1**
(45) Date de publication et mention de la délivrance du brevet: **06.09.2023**
(21) Numéro de dépôt: 19720513.1
(22) Date de dépôt: 19.04.2019
(51) Int. Cl.: B29C 45/14, H01Q 1/02, H05B 3/18

(54) **PROCEDE DE FABRICATION D'UN ELEMENT POUR PIECE DE CARROSSERIE COMPORTANT DES MOYENS DE DEGIVRAGE PERFECTIONNES**
VERFAHREN ZUR HERSTELLUNG EINES ELEMENTS FÜR EIN KAROSSERIEBAUTEIL MIT VERBESSERTEN ENTEISUNGSMITTELN
METHOD FOR MANUFACTURING AN ELEMENT FOR A BODYWORK COMPONENT COMPRISING IMPROVED DEICING MEANS

(30) Priorité: 19.04.2018 FR 1853420
(43) Date de publication de la demande: 24.02.2021
(73) Titulaire: Compagnie Plastic Omnium, 69007 Lyon (FR)
(72) Inventeur: STABLO, Frédéric, 38390 Porcieu Amblagnieu (FR); FRAPPA, Georges, 69005 LYON (FR); DUBOST, Elise, 01330 Villars les Dombes (FR); GRANDO, Jérôme, VERTRIEU 38390 (FR); BOITEUX, Guillaume, 69006 Lyon (FR); TRESSE, David, 01390 SAINT-ANDRE DE CORCY (FR); MURARIU, Constantin, 69680 Chassieu (FR); CHARNAUX, Sébastien, 01250 JOURNANS (FR)
(74) Mandataire: LLR
(86) Numéro de dépôt international: PCT/EP2019/060241
(87) Numéro de publication internationale: WO 2019/202154

(56) Documents cités:
- EP-A1- 3 002 104
- DE-A1- 19 927 999

## Description

L'invention concerne le domaine de la fabrication d'un élément en matière plastique, destiné à être monté sur une pièce de carrosserie de véhicule automobile. De nombreux véhicules modernes sont équipés d'éléments de carrosserie en matière plastique pouvant équiper par exemple un hayon arrière, un flanc de portière, des pare-chocs avant et arrière, un toit, etc.

En particulier, depuis l'introduction des systèmes d'assistance à la conduite, on a besoin de placer sur certaines pièces de carrosserie en plastique des capteurs de différentes sortes, afin de mesurer des paramètres physiques extérieurs représentatifs de l'environnement extérieur du véhicule automobile. L'ensemble des valeurs de ces paramètres forme des informations disponibles en temps réel sur l'environnement du véhicule.

On utilise alors des éléments de carrosserie, rapportés sur la pièce de carrosserie, ayant, par exemple, une fonction de radôme, c'est-à-dire un élément transparent aux ondes électromagnétiques protégeant et cachant des capteurs. DE19927999 divulgue un procédé de fabrication d'un élément pour pièce de carrosserie et que: - on fabrique une ébauche en matière plastique comprenant au moins un orifice s'étendant entre les faces de l'ébauche. - on pré-positionne par rapport à l'ébauche un organe de connexion électriquement conducteur comprenant une première extrémité accessible du côté de la première face de l'ébauche et une seconde extrémité s'étendant à travers l'orifice de l'ébauche de façon à être accessible du côté de la seconde face de l'ébauche , - on positionne une piste chauffante électriquement conductrice sur la première face de l'ébauche , la piste chauffante comprenant une partie de connexion libre par rapport à cette première face. - on surmoule une couche supplémentaire de matériau plastique sur la première face de l'ébauche de façon à recouvrir la piste chauffante, la première extrémité de l'organe de connexion , le logement et l'orifice de l'ébauche.

A titre d'exemple, les pare-chocs sont désormais fréquemment équipés de radars de proximité qui permettent d'assister le conducteur lors des phases de manoeuvre de stationnement du véhicule automobile à basse vitesse.

Certains capteurs, comme celui cité dans l'exemple ci-dessus, peuvent voir leur fonctionnement normal déréglé par la présence d'une couche de glace, de neige ou de givre en cas de température en dessous de 10 degré Celsius car le mouvement du véhicule a un effet négatif sur la température. On peut donc observer des dépôts de givre même à des températures positives. Une couche de givre vient perturber le passage normal des ondes électromagnétiques et est une source d'erreur dans la mesure des paramètres physiques extérieurs.

Afin d'éviter le dépôt de givre, qui vient non seulement rendre le système d'assistance inutilisable, mais qui de surcroit peut générer de fausses alarmes, il est indispensable de prévoir un système de dégivrage sur l'élément pour pièce de carrosserie, par exemple sur la zone de la pièce de carrosserie qui sert de radôme.

Un tel système de dégivrage est traditionnellement formé d'une piste chauffante constituée de fils conducteurs capables de transformer une énergie électrique en énergie thermique, associée à deux plaques de connexion à chaque extrémité de la piste chauffante afin de l'alimenter en un courant électrique, le tout étant positionné sur un élément pour pièce de carrosserie et à proximité d'un capteur. L'énergie thermique ainsi dégagée permet de dégivrer localement la pièce dans le cas où une couche de givre s'est formée. La piste chauffante, pour éviter de perturber le passage des ondes électromagnétiques, doit être positionnée selon une géométrie particulière désignée dans ce qui suit par un positionnement « en serpentin ». Pour la clarté de l'exposé, on définit une piste chauffante positionnée en « serpentin » de la façon suivante : une piste chauffante en serpentin suit un trajet en boustrophédon, à savoir un trajet qui décrit des segments parallèles avec des virages à 180° entre deux segments qui tournent alternativement dans un sens, puis dans le sens opposé à ce sens avec une distance constante entre deux segments parallèles.

Par extension, une piste positionnée en serpentin désigne une piste dont le positionnement permet le passage d'ondes électromagnétiques caractérisées par une certaine plage de fréquence.

En effet, l'exactitude du positionnement de la piste chauffante est très importante pour éviter qu'elle ne fasse obstacle au passage des ondes électromagnétiques, notamment le parallélisme entre les différents segments des pistes chauffantes et l'espacement entre ces pistes chauffantes doit être respecté très précisément. À chaque fréquence d'onde électromagnétique va correspondre une configuration du positionnement de la piste chauffante optimale pour que cette piste chauffante soit transparente vis-à-vis du passage de cette onde électromagnétique.

Une telle réalisation ne protège pas les plaques de connexion et la piste conductrice des agressions pouvant survenir depuis la face intérieure de l'élément pour pièce de carrosserie une fois monté sur un véhicule, comme par exemple la corrosion. Les vibrations et les secousses peuvent également modifier et/ou endommager le système de dégivrage sur le long terme, et notamment la connexion avec un connecteur qui permet l'alimentation électrique du système de dégivrage. Par ailleurs, le moulage de l'élément pour carrosserie est rendu complexe par la présence de broches conductrices qui doivent être maintenues en partie en dehors de la zone de moulage, afin de ne pas être recouverte de matière plastique pour garder leur propriété conductrice. Enfin, il est souvent nécessaire de réaliser des reprises de soudure sur les broches conductrices afin d'alimenter électriquement le système de dégivrage par exemple via un connecteur standard.

L'invention a pour but de remédier à ces inconvénients en proposant un procédé facilement industrialisable qui permet une bonne mise en place, et une bonne adhésion du système de dégivrage sur un élément pour pièce de carrosserie de façon simple, efficace et étanche, et qui assure notamment une connexion aisée et robuste avec un organe de connexion à un connecteur, procurant au dispositif final une fiabilité et une durée de vie très importante.

A cet effet, l'invention a pour objet un procédé de fabrication d'un élément pour pièce de carrosserie, caractérisé en ce que :
- on fabrique une ébauche en matière plastique comprenant au moins un logement situé sur une première face de l'ébauche, ledit logement comprenant au moins un orifice s'étendant entre un fond du logement et une seconde face de l'ébauche opposée à la première face,
- on pré-positionne par rapport à l'ébauche un organe de connexion électriquement conducteur comprenant une première extrémité accessible du côté de la première face de l'ébauche et une seconde extrémité s'étendant à travers l'orifice de l'ébauche de façon à être accessible du côté de la seconde face de l'ébauche,
- on positionne une piste chauffante électriquement conductrice sur la première face de l'ébauche, la piste chauffante comprenant une partie de connexion libre par rapport à cette première face,
- on assujettit la partie de connexion de la piste à la première extrémité de l'organe de connexion en formant au moins une spire de la partie de connexion de la piste autour de la première extrémité de l'organe de connexion,
- on pince la première extrémité de l'organe de connexion et la partie de connexion de la piste entre elles,
- on soude la première extrémité de l'organe de connexion et la partie de connexion de la piste entre elles par apport d'énergie électrique,
- on positionne la première extrémité de l'organe de connexion dans le logement,
- on surmoule une couche supplémentaire de matériau plastique sur la première face de l'ébauche de façon à recouvrir la piste chauffante, la première extrémité de l'organe de connexion, le logement et l'orifice de l'ébauche.

Cela permet de pouvoir garantir une bonne cohésion entre l'organe de connexion et la partie de connexion de la piste chauffante en assurant un contact de qualité entre eux par des étapes simples de pincement et de soudage, afin d'obtenir un élément pour pièce de carrosserie robuste. Ainsi, la connexion entre l'organe de connexion et la piste chauffante est très fiable. Par ailleurs, le recouvrement de l'ébauche par une couche supplémentaire permet de garantir l'étanchéité et le bon maintien de la piste chauffante et l'organe de connexion, et ainsi d'éviter les agressions extérieures telles que la corrosion. Par ailleurs, en logeant l'organe de connexion dans le logement, on ne forme pas de saillie par rapport à la première face de l'ébauche, ou bien une saillie très limitée, ce qui permet d'éviter la formation de bossage une fois la couche supplémentaire surmoulée. Former au moins une spire de la partie de connexion de la piste autour de la première extrémité de l'organe de connexion, permet de former un assujettissement simple à mettre en oeuvre et de qualité, participant à la fiabilité et à la robustesse de la connexion entre la piste chauffante et l'organe de connexion.

Le procédé selon l'invention peut également comporter les caractéristiques optionnelles suivantes :
- On apporte l'énergie de soudage via un outil de pincement de la première extrémité de l'organe de connexion avec la partie de connexion de la piste, cet outil étant utilisé de préférence lors de l'étape de pincement.
   Ainsi, cela permet de faciliter le procédé en limitant l'utilisation et le changement d'outil lors de la mise en oeuvre du procédé.
- La première extrémité de l'organe de connexion électrique est formée par une patte pliée en crochet comprenant une âme reliant une première branche libre et une seconde branche destinée à être en contact avec le fond du logement, et dans lequel la seconde extrémité de l'organe de connexion est formée par un prolongement de la seconde branche, plié par rapport à la seconde branche. Ainsi, cela facilite la mise en oeuvre du procédé en permettant de réaliser facilement une spire autour de la patte pliée en crochet et d'assurer un pincement et un soudage de bonne qualité tout en augmentant la cadence de production, la patte pliée en crochet étant pincée autour de la partie de connexion de la piste chauffante.
- La couche supplémentaire de matériau plastique recouvre entièrement la piste chauffante.
   Ainsi, cela permet d'assurer l'excellente étanchéité de l'ensemble de la piste chauffante pour la protéger contre les agressions extérieures telles que la corrosion ou des chocs.
- On positionne la piste chauffante sur l'ébauche en matière plastique selon une disposition compatible avec le passage d'ondes électromagnétiques à travers l'élément en matière plastique, ces ondes étant destinées à être émises par un capteur destiné à être monté au droit de l'élément.
   Ainsi, cela permet d'assurer que la piste chauffante n'altère pas le signal du capteur devant lequel elle est localisée.
- La piste chauffante comprend en outre une partie en serpentin de dégivrage. Ainsi, cela permet d'assurer que la piste chauffante ne soit pas détectée par les ondes électromagnétiques du capteur devant lequel elle est localisée et n'altère pas son signal.
- Avant l'étape de soudage, on détruit localement une couche d'isolant recouvrant la piste chauffante par apport d'énergie électrique via un outil de pincement de la première extrémité de l'organe de connexion avec la partie de connexion de la piste, utilisé de préférence lors de l'étape de pincement.
   Ainsi, cela permet d'assurer un contact direct entre la première extrémité de l'organe de connexion et la piste chauffante afin de garantir une bonne connexion électrique.
- On fixe la piste chauffante sur la première face de l'ébauche en la soudant par chauffage de la piste à une température permettant la fusion locale de la matière plastique de l'ébauche.
   Cela permet de souder la piste chauffante sur l'ébauche, garantissant ainsi la position correcte de la piste chauffante sur l'ébauche.
- on maintient en position l'organe de connexion dans le logement à l'aide de moyens d'encliquetage complémentaires portés sur la seconde extrémité de l'organe de connexion et la seconde face de l'ébauche, par exemple à l'aide d'une patte d'encliquetage portée par la seconde extrémité et coopérant avec la seconde face de l'ébauche.
   Ainsi, cela permet de maintenir correctement l'organe de connexion en position dans le logement.

L'invention concerne également un élément pour pièce de carrosserie, caractérisé en ce qu'il comprend :
- une ébauche en matière plastique comprenant au moins un logement situé sur une première face de l'ébauche, ledit logement comprenant au moins un orifice s'étendant entre un fond du logement et une seconde face de l'ébauche opposée à la première face,
- une piste chauffante électriquement conductrice positionnée sur la première face de l'ébauche, la piste chauffante comprenant une partie de connexion,
- un organe de connexion électriquement conducteur comprenant une première extrémité positionnée dans le logement de l'ébauche et une seconde extrémité, s'étendant à travers l'orifice de l'ébauche de façon à être accessible du côté de la seconde face de l'ébauche, la partie de connexion de la piste chauffante formant au moins une spire autour de la première extrémité de l'organe de connexion, la première extrémité et la spire de la partie de connexion de la piste étant pincées et soudées entre elles,
- une couche supplémentaire de matériau plastique, surmoulée sur la première face de l'ébauche, recouvrant la piste chauffante, la première extrémité de l'organe de connexion, le logement et l'orifice de l'ébauche.

Cela permet de pouvoir garantir une bonne cohésion entre l'organe de connexion et la partie de connexion de la piste chauffante, la première extrémité de l'organe de connexion étant pincée et soudée avec la spire de la partie de connexion de la piste chauffante afin de garantir une liaison robuste. Ainsi, la connexion entre l'organe de connexion et la piste chauffante est très fiable, la piste chauffante et l'organe de connexion sont très bien protégés avec une excellente étanchéité et les agressions extérieures telles que la corrosion sont évitées. L'organe de connexion permet de relier facilement la piste chauffante à une alimentation électrique, par exemple via un connecteur standard. De plus, la couche supplémentaire permet une continuité de matière complète entre la couche de matière qui vient protéger le dispositif et l'élément en matière plastique de sorte qu'il ne reste aucune bulle d'air risquant de perturber le passage des ondes électromagnétiques, notamment sur la zone de la pièce de carrosserie qui sert de radôme. Enfin, la couche supplémentaire permet d'améliorer la résistance de la connexion entre l'organe de connexion et la piste chauffante aux vibrations du véhicule sur lequel l'élément pour pièce de carrosserie est monté lors de son utilisation. Former au moins une spire de la partie de connexion de la piste autour de la première extrémité de l'organe de connexion, permet de former un assujettissement simple à mettre en oeuvre et de qualité, participant à la fiabilité et à la robustesse de la connexion entre la piste chauffante et l'organe de connexion.

L'élément pour pièce de carrosserie selon l'invention peut également comporter les caractéristiques optionnelles suivantes :
- La première extrémité de l'organe de connexion électrique est formée par une patte pliée en crochet comprenant une âme reliant une première branche libre et une seconde branche destinée à être en contact avec le fond du logement, et dans lequel la seconde extrémité de l'organe de connexion est formée par un prolongement de la seconde branche, plié par rapport à la seconde branche. Ainsi, cela permet de pouvoir garantir une excellente cohésion entre l'organe de connexion et la partie de connexion de la piste chauffante, la patte pliée en crochet étant pincée autour de la partie de connexion de la piste chauffante. Cela permet de garantir une liaison très robuste, et notamment de résister aux vibrations produites lors de l'utilisation d'un véhicule sur lequel est monté l'élément.
- L'organe de connexion est maintenu en position dans le logement à l'aide de moyens d'encliquetage complémentaires portés sur la seconde extrémité de l'organe de connexion et la seconde face de l'ébauche, par exemple à l'aide d'une patte d'encliquetage portée par la seconde extrémité et coopérant avec la seconde face de l'ébauche.
   Ainsi, cela permet de pouvoir garantir la position de l'organe de connexion dans le logement même en cas de fortes vibrations produites lors de l'utilisation d'un véhicule sur lequel est monté l'élément.
- La piste chauffante est positionnée sur l'ébauche en matière plastique selon une disposition compatible avec le passage d'ondes électromagnétiques à travers l'élément en matière plastique, ces ondes étant destinées à être émises par un capteur destiné à être monté au droit de l'élément.
   Ainsi, cela permet d'assurer que la piste chauffante n'altère pas le signal du capteur devant lequel elle est localisée.
- La piste chauffante comprend en outre une partie en serpentin de dégivrage.
   Ainsi, cela permet d'assurer que la piste chauffante ne soit pas détectée par les ondes électromagnétiques du capteur devant lequel elle est localisée et n'altère pas son signal.
- La piste chauffante comprend un matériau conducteur électriquement choisi parmi du cuivre, du tungstène ou un alliage comprenant du cuivre ou du tungstène. Ainsi, cela permet à la piste chauffante d'être un bon conducteur électrique et de chauffer lors du passage d'un courant électrique.
- La piste chauffante est recouverte d'une couche d'isolant.
   Ainsi, cela permet de protéger la piste chauffante.
- L'isolant est choisi parmi de l'émail ou une peinture isolante.
   Ainsi, cela permet de recouvrir la piste chauffante d'un isolant efficace.
- La piste chauffante est fixée sur la première face de l'ébauche par fusion locale de la matière plastique de l'ébauche.
   Cela permet de souder la piste chauffante sur l'ébauche, garantissant ainsi la position correcte de la piste chauffante sur l'ébauche, et de résister aux vibrations du véhicule sur lequel l'élément pour pièce de carrosserie est monté lors de son l'utilisation.

L'invention sera mieux comprise à la lecture de la description qui va suivre donnée à titre d'exemple et faite en se référant aux dessins dans lesquels :

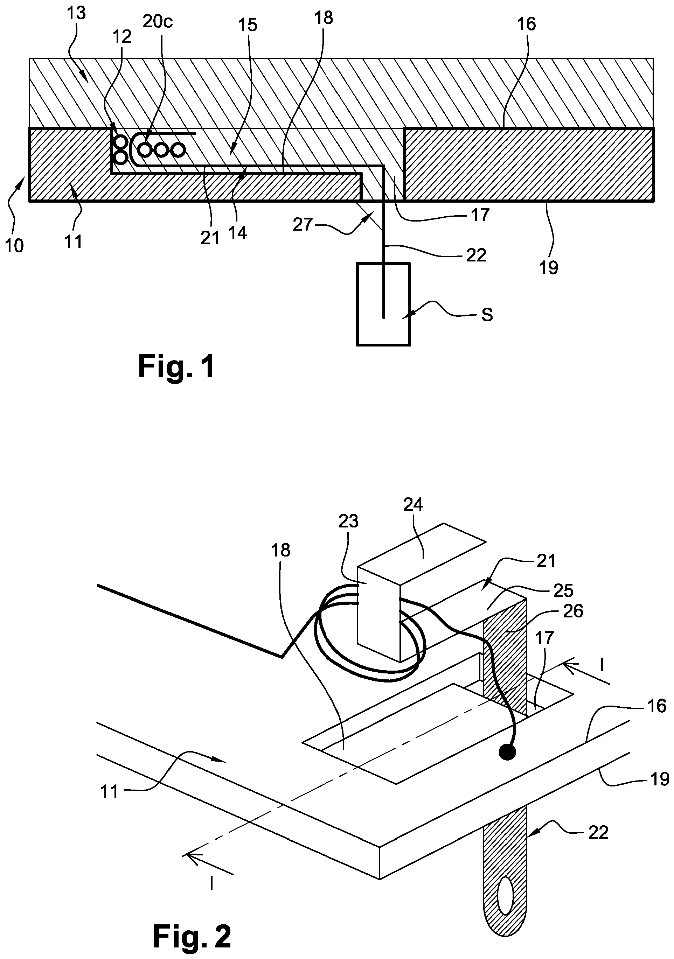

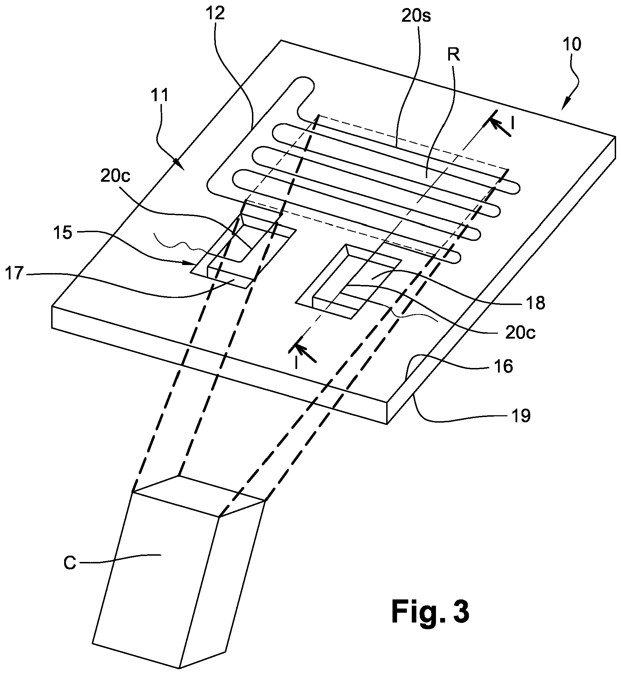

- la figure 1 est une vue schématique en coupe suivant le plan I-I de la figure 2 et 3, représentant une partie d'un élément pour pièce de carrosserie selon l'invention, cette figure montrant un organe de connexion dans un logement situé sur une première face d'une ébauche ;
- la figure 2 est une vue schématique en perspective représentant une partie de l'élément pour pièce de carrosserie au cours d'une étape du procédé de fabrication selon l'invention, cette figure montrant l'organe de connexion pré-positionné par rapport à l'ébauche, autour duquel deux spires d'une partie de connexion d'une piste chauffante sont formées ;
- la figure 3 est une vue schématique en perspective représentant l'élément pour pièce de carrosserie au cours d'une étape de fabrication selon l'invention, cette figure montrant une ébauche sur laquelle est positionnée une piste chauffante ;

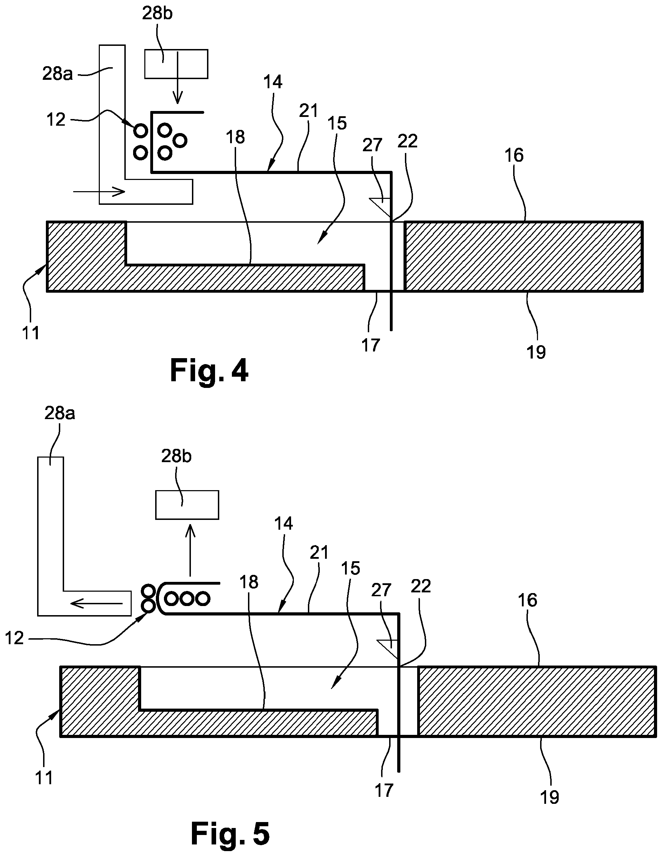

- la figure 4 est une vue schématique en coupe suivant le plan I-I de la figure 2 et 3, représentant une partie d'un élément pour pièce de carrosserie selon l'invention, cette figure montrant la mise en place d'un outil de pincement avant l'étape de pincer la première extrémité de l'organe de connexion et les spires de la partie de connexion de la piste entre elles ;
- la figure 5 est une vue schématique en coupe suivant le plan I-I des figures 2 et 3, représentant une partie d'un élément pour pièce de carrosserie selon l'invention, cette figure montrant le retrait de l'outil de pincement après l'étape de pincer la première extrémité de l'organe de connexion et les spires de la partie de connexion de la piste entre elles.

On a représenté sur la figure 1 une partie d'un élément 10 destiné à être rapporté sur une pièce de carrosserie d'un véhicule automobile, par exemple sur un hayon arrière, un flanc de portière, sur un pare-chocs avant ou arrière, ou encore sur un toit, afin de protéger et cacher un capteur C placé sur le véhicule. Plus particulièrement, l'élément 10 a une fonction de radôme pour le capteur C.

L'élément 10 pour pièce de carrosserie comprend une ébauche 11 en matière plastique, une piste chauffante 12, une couche supplémentaire 13 en matière plastique et un organe de connexion 14 électriquement conducteur.

L'ébauche 11 en matière plastique présente au moins un logement 15. Le logement 15 est situé sur une première face 16 de l'ébauche 11.

Le logement 15 comprend un orifice 17 qui s'étend entre un fond 18 du logement 15 et une seconde face 19 de l'ébauche 11 opposée à la première face 16.

Dans l'exemple décrit, l'ébauche 11 comprend deux logements 15 comme cela est représenté sur la figure 3, chacun comprenant un orifice 17.

En se référant aux figures 2 et 3, on voit que la piste chauffante 12 est positionnée et fixée par fusion locale de la matière plastique sur la première face 16 de l'ébauche 11, c'est-à-dire une fusion en périphérie de la piste chauffante 12 qui est déposée sur la première face 16 de l'ébauche 11. Cette piste 12 comporte, pour chaque logement 15, une partie dite partie de connexion 20c, s'étendant au niveau du logement 15 de l'ébauche 11. La piste 12 comporte également une partie en serpentin de dégivrage 20s destinée à être placé sur la zone de l'élément 10 qui sert de radôme. La partie en serpentin 20s de dégivrage de la piste chauffante 12 est positionnée sur l'ébauche 11 selon une disposition compatible avec le passage d'ondes électromagnétiques à travers l'élément 10 en matière plastique. Ces ondes sont destinées à être émises par le capteur C destiné à être monté au droit de l'élément 10. Dans l'exemple décrit, la partie en serpentin 20s de dégivrage de la piste chauffante 12 suit un trajet en boustrophédon.

La piste chauffante 12 comprend un matériau électriquement conducteur. Dans l'exemple décrit, la piste chauffante 12 comprend du cuivre recouvert d'une couche d'émail formant isolant. On notera que la piste chauffante 12 peut, par exemple, comprendre du tungstène ou un alliage à base de cuivre ou de tungstène. Par ailleurs, la couche d'isolant peut, par exemple, comprendre en remplacement de l'émail, une peinture isolante. Lorsqu'un courant circule dans la piste chauffante 12, celle-ci dégage des calories par effet Joule. Enfin, dans l'exemple décrit, la piste chauffante 12 a un diamètre compris entre 300 et 500 µm.

Comme on peut le voir sur la figure 1, l'organe de connexion 14 électriquement conducteur comprend une première extrémité 21 positionnée dans le logement 15 de l'ébauche 11. L'organe de connexion 14 comprend également une seconde extrémité 22 s'étendant à travers l'orifice 17 de l'ébauche 11 et destinée à être reliée à un connecteur standard S. Ainsi, la seconde extrémité 22 de l'organe de connexion 14 est accessible du côté de la seconde face 19 de l'ébauche 11. Par ailleurs, la partie de connexion 20c de la piste 12 est assujettie à la première extrémité 21 de l'organe de connexion 14 en formant au moins une spire autour de la première extrémité 21 de l'organe de connexion 14. La première extrémité 21 de l'organe de connexion 14 et la spire de la partie de connexion 20c sont pincées et soudées entre elles. Dans l'exemple décrit, la partie de connexion 20c de la piste 12 forme deux spires autour de la première extrémité 21 de l'organe de connexion 14. La couche d'émail formant isolant de la piste chauffante 12 est détruite localement au niveau d'une zone de contact entre la première extrémité 21 de l'organe de connexion 14 et la partie de connexion 20c de la piste chauffante 12.

Dans l'exemple décrit, la première extrémité 21 de l'organe de connexion électrique 14 est formée par une patte pliée en crochet comprenant une âme 23 reliant une première branche libre 24 et une seconde branche 25 destinée à être en contact avec le fond 18 du logement 15. La seconde extrémité 22 de l'organe de connexion 14 est formée par un prolongement 26 de la seconde branche 25, plié par rapport à la seconde branche 25, par exemple à angle droit. Par ailleurs, l'organe de connexion 14 comprend un alliage d'argent et de cuivre.

L'organe de connexion 14 peut également comprendre une patte d'encliquetage 27 portée par la seconde extrémité 22 de l'organe de connexion 14 afin d'être maintenu en position dans le logement 15. Cette patte d'encliquetage 27 coopère avec la seconde face 19 de l'ébauche 11.

Enfin, la couche supplémentaire 13 en matériau plastique surmoule la première face 16 de l'ébauche 11. Ainsi, dans l'exemple décrit, la couche supplémentaire 13 recouvre la piste chauffante 12, la première extrémité 21 de l'organe de connexion 14, le logement 15 et l'orifice 17 de l'ébauche 11.

On décrira ci-dessous un procédé selon l'invention pour fabriquer l'élément 10 pour pièce de carrosserie.

Tout d'abord, on fabrique l'ébauche 11 en matière plastique. Dans l'exemple décrit, l'ébauche 11 comprend deux logements 15 comprenant chacun un orifice 17.

Ensuite, comme représenté sur les figures 2, 4 et 5, on pré-positionne par rapport à l'ébauche 11 l'organe de connexion 14 électriquement conducteur. La première extrémité 21 de l'organe de connexion 14 est accessible du côté de la première face 16 de l'ébauche 11. La seconde extrémité 22 de l'organe de connexion 14 s'étend à travers l'orifice 17 de l'ébauche 11 de façon à être accessible du côté de la seconde face 19 de l'ébauche 11. Ainsi, la seconde extrémité peut être reliée, directement ou non, à un connecteur standard S.

On positionne ensuite la piste chauffante 12 électriquement conductrice sur la première face 16 de l'ébauche 11, par exemple à l'aide d'une sonotrode. La piste chauffante 12 comprend une partie de connexion 20c au niveau du logement 15 de l'ébauche 11, libre par rapport à la première face 16 de l'ébauche 11 de sorte à faciliter sa liaison avec l'organe de connexion 14. Comme représenté sur la figure 3, la partie en serpentin de dégivrage 20s de la piste chauffante 12 est positionnée sur l'ébauche 11 suivant un trajet en boustrophédon.

Dans l'exemple décrit, on soude la piste chauffante 12 sur la première face 16 de l'ébauche 11 en chauffant la piste chauffante 12, par exemple en générant un courant électrique ou des ultrasons dans la piste chauffante 12, à une température permettant la fusion locale de la matière plastique de l'ébauche 11.

Par la suite, on assujettit la partie de connexion 20c de la piste 12 à la première extrémité 21 de l'organe de connexion 14 en formant au moins une spire de la partie de connexion 20c de la piste 12 autour de la première extrémité 21 de l'organe de connexion 14. Dans l'exemple décrit, comme représenté à la figure 2, on forme deux spires de la partie de connexion 20c de la piste 12 autour de l'âme 23 de la première extrémité 21 de l'organe de connexion 14. Ainsi, on forme une surface de contact importante entre l'organe de connexion 14 et la piste chauffante 12.

En se référant aux figures 4 et 5, on pince ensuite, à l'aide d'un outil de pincement 28, la première extrémité 21 de l'organe de connexion 14 et les deux spires de la partie de connexion 20c de la piste chauffante 12 entre elles. Dans l'exemple décrit, l'outil de pincement 28 comprend une enclume 28a et un organe de pincement vecteur d'énergie électrique 28b.

Ensuite, on détruit localement la couche d'émail formant isolant recouvrant la piste chauffante 12. Dans l'exemple décrit, on détruit la couche d'émail formant isolant par apport d'énergie électrique via un outil de pincement de la première extrémité 21 de l'organe de connexion 14 avec la partie de connexion 20c de la piste 12. En effet, la combinaison de l'effet de l'apport d'énergie et l'effet mécanique du pincement permet de détruire efficacement la couche d'isolant. On notera que la quantité d'énergie apportée est liée à l'épaisseur et à la nature de l'isolant et que l'on utilise de préférence l'outil de pincement 28 utilisé lors de l'étape de pincement.

Puis, on soude la première extrémité 21 de l'organe de connexion 14 et les deux spires de la partie de connexion 20c de la piste 12 entre elles, par exemple par apport d'énergie électrique. Dans l'exemple décrit, on apporte l'énergie de soudage via un outil de pincement de la première extrémité 21 de l'organe de connexion 14 avec la partie de connexion 20c de la piste 12. On notera que l'intensité du courant électrique ou des ultrasons dépend du matériau formant la piste chauffante 12 et peut être différente de l'intensité utilisée pour détruire la couche d'isolant. On notera par ailleurs que l'on utilise de préférence l'outil de pincement 28 utilisé lors de l'étape de pincement. Ainsi, le même outil peut permettre à la fois le pincement entre elles de la première extrémité 21 de l'organe de connexion 14 et les deux spires de la partie de connexion 20c de la piste chauffante 12, la destruction de la couche d'émail et le soudage de la première extrémité 21 de l'organe de connexion 14 avec la partie de connexion 20c de la piste 12. De plus, on forme ainsi une surface de contact importante entre l'organe de connexion 14 et la piste chauffante 12 garantissant une connexion électrique robuste et de qualité.

On notera que le pré-positionnement de l'organe de connexion 14 par rapport à l'ébauche permet de dégager l'accès à la première extrémité 21 de l'organe de connexion 14 pour des moyens de pincement et de soudage.

On positionne ensuite la première extrémité 21 de l'organe de connexion 14 dans le logement 15. On notera que, comme représenté sur la figure 1, l'organe de connexion 14 peut être maintenu dans le logement 15 à l'aide de la patte d'encliquetage 27 portée par la seconde extrémité 22 de l'organe de connexion 14 et coopérant avec la seconde face 19 de l'ébauche 11.

Enfin, on surmoule la couche supplémentaire 13 de matériau plastique sur la première face 16 de l'ébauche 11 de façon à recouvrir la piste chauffante 12, la première extrémité 21 de l'organe de connexion 14, le logement 15 et l'orifice 17 de l'ébauche 11. On notera que dans l'exemple décrit, la couche supplémentaire 13 de matériau plastique recouvre entièrement la piste chauffante 12 afin d'assurer une bonne protection contre des chocs et de la corrosion la piste 12 et une bonne étanchéité de l'ensemble 10. De plus, la couche supplémentaire 13, en comblant l'orifice 17, améliore la résistance de la connexion entre l'organe de connexion 14 et la piste chauffante 12 aux vibrations du véhicule sur lequel l'élément pour pièce de carrosserie est monté lors de son l'utilisation.

L'invention n'est pas limitée au mode de réalisation présenté et d'autres modes de réalisation apparaîtront clairement à l'homme du métier. En particulier, la première extrémité 21 de l'organe de connexion 14 peut comporter des dents et l'assujettissement peut se faire par enroulement de la partie de connexion 20c de la piste chauffante 12 autour de dents formées par la première extrémité 21 de l'organe de connexion 14. Par ailleurs, l'organe de connexion 14 peut être maintenu en position dans le logement 15 à l'aide de moyens d'encliquetage complémentaires portés sur la seconde extrémité 22 de l'organe de connexion 14 et la seconde face 19 de l'ébauche 11, par exemple la patte d'encliquetage 27 peut notamment être portée sur la seconde face 19 de l'ébauche 11, ou encore sur une paroi de l'orifice 17.

## Revendications

1. Procédé de fabrication d'un élément (10) pour pièce de carrosserie, dans lequel :
- on fabrique une ébauche (11) en matière plastique comprenant au moins un logement (15) situé sur une première face (16) de l'ébauche (11), ledit logement (15) comprenant au moins un orifice (17) s'étendant entre un fond (18) du logement (15) et une seconde face (19) de l'ébauche (11) opposée à la première face (16),
- on pré-positionne par rapport à l'ébauche (11) un organe de connexion (14) électriquement conducteur comprenant une première extrémité (21) accessible du côté de la première face (16) de l'ébauche (11) et une seconde extrémité (22) s'étendant à travers l'orifice (17) de l'ébauche (11) de façon à être accessible du côté de la seconde face (19) de l'ébauche (11),
- on positionne une piste chauffante (12) électriquement conductrice sur la première face (16) de l'ébauche (11), la piste chauffante (12) comprenant une partie de connexion (20c) libre par rapport à cette première face (16),
**caractérisé en ce que** :
- on assujettit la partie de connexion (20c) de la piste (12) à la première extrémité (21) de l'organe de connexion (14) en formant au moins une spire de la partie de connexion (20c) de la piste (12) autour de la première extrémité (21) de l'organe de connexion (14),
- on pince la première extrémité (21) de l'organe de connexion (14) et la partie de connexion (20c) de la piste (12) entre elles,
- on soude la première extrémité (21) de l'organe de connexion (14) et la partie de connexion (20c) de la piste (12) entre elles par apport d'énergie électrique,
- on positionne la première extrémité (21) de l'organe de connexion (14) dans le logement (15),
- on surmoule une couche supplémentaire (13) de matériau plastique sur la première face (16) de l'ébauche (11) de façon à recouvrir la piste chauffante (12), la première extrémité (21) de l'organe de connexion (14), le logement (15) et l'orifice (17) de l'ébauche (11).

2. Procédé de fabrication d'un élément (10) pour pièce de carrosserie selon la revendication 1, dans lequel on apporte l'énergie de soudage via un outil de pincement de la première extrémité (21) de l'organe de connexion (14) avec la partie de connexion (20c) de la piste (12), cet outil étant utilisé de préférence lors de l'étape de pincement.

3. Procédé de fabrication d'un élément (10) pour pièce de carrosserie selon l'une quelconque des revendications précédentes, dans lequel la première extrémité (21) de l'organe de connexion électrique (14) est formée par une patte pliée en crochet comprenant une âme (23) reliant une première branche (24) libre et une seconde branche (25) destinée à être en contact avec le fond (18) du logement (15), et dans lequel la seconde extrémité (22) de l'organe de connexion (14) est formée par un prolongement (26) de la seconde branche (25), plié par rapport à la seconde branche (25).

4. Procédé de fabrication d'un élément (10) pour pièce de carrosserie selon l'une quelconque des revendications précédentes, dans lequel la couche supplémentaire (13) de matériau plastique recouvre entièrement la piste chauffante (12).

5. Procédé de fabrication d'un élément (10) pour pièce de carrosserie selon l'une quelconque des revendications précédentes, dans lequel on positionne la piste chauffante (12) sur l'ébauche (11) en matière plastique selon une disposition compatible avec le passage d'ondes électromagnétiques à travers l'élément (10) en matière plastique, ces ondes étant destinées à être émises par un capteur (C) destiné à être monté au droit de l'élément (10).

6. Procédé de fabrication d'un élément (10) pour pièce de carrosserie selon l'une quelconque des revendications précédentes, dans lequel la piste chauffante (12) comprend en outre une partie en serpentin (20s) de dégivrage.

7. Procédé de fabrication d'un élément (10) pour pièce de carrosserie selon l'une quelconque des revendications précédentes, dans lequel avant l'étape de soudage, on détruit localement une couche d'isolant recouvrant la piste chauffante (12) par apport d'énergie électrique via un outil de pincement de la première extrémité (21) de l'organe de connexion (14) avec la partie de connexion (20c) de la piste (12), utilisé de préférence lors de l'étape de pincement.

8. Procédé de fabrication d'un élément (10) pour pièce de carrosserie selon l'une quelconque des revendications précédentes, dans lequel on fixe la piste chauffante (12) sur la première face (16) de l'ébauche (11) en la soudant par chauffage de la piste (12) à une température permettant la fusion locale de la matière plastique de l'ébauche (11).

9. Procédé de fabrication d'un élément (10) pour pièce de carrosserie selon l'une quelconque des revendications précédentes, dans lequel on maintient en position l'organe de connexion (14) dans le logement (15) à l'aide de moyens d'encliquetage complémentaires portés sur la seconde extrémité (22) de l'organe de connexion (14) et la seconde face (19) de l'ébauche (11), par exemple à l'aide d'une patte d'encliquetage (27) portée par la seconde extrémité (22) et coopérant avec la seconde face (19) de l'ébauche (11).

10. Elément (10) pour pièce de carrosserie, comprenant :
- une ébauche (11) en matière plastique comprenant au moins un logement (15) situé sur une première face (16) de l'ébauche (11), ledit logement (15) comprenant au moins un orifice (17) s'étendant entre un fond (18) du logement (15) et une seconde face (19) de l'ébauche (11) opposée à la première face (16),
- une piste chauffante (12) électriquement conductrice positionnée sur la première face (16) de l'ébauche (11), la piste chauffante (12) comprenant une partie de connexion (20c),
**caractérisé en ce qu'**il comprend en outre :
- un organe de connexion (14) électriquement conducteur comprenant une première extrémité (21) positionnée dans le logement (15) de l'ébauche (11) et une seconde extrémité (22), s'étendant à travers l'orifice (15) de l'ébauche (11) de façon à être accessible du côté de la seconde face (19) de l'ébauche (11), la partie de connexion (20c) de la piste chauffante (12) étant assujettie à la première extrémité (21) de l'organe de connexion (14) en formant au moins une spire de la partie de connexion (20c) de la piste (12) autour de la première extrémité (21) de l'organe de connexion (14), la première extrémité (21) et la partie de connexion (20c) de la piste (12) étant pincées et soudées entre elles,
- une couche supplémentaire (13) de matériau plastique, surmoulée sur la première face (16) de l'ébauche (11), recouvrant la piste chauffante (12), la première extrémité (21) de l'organe de connexion (14), le logement (15) et l'orifice (17) de l'ébauche (11).

11. Elément (10) pour pièce de carrosserie selon la revendication 10, dans lequel la première extrémité (21) de l'organe de connexion électrique (14) est formée par une patte pliée en crochet comprenant une âme (23) reliant une première branche (24) libre et une seconde branche (25) destinée à être en contact avec le fond (18) du logement (15), et dans lequel la seconde extrémité (22) de l'organe de connexion (14) est formée par un prolongement (26) de la seconde branche (25), plié par rapport à la seconde branche (25).

12. Elément (10) pour pièce de carrosserie selon l'une quelconque des revendications 10 à 11, dans lequel l'organe de connexion (14) est maintenu en position dans le logement (15) à l'aide de moyens d'encliquetage complémentaires portés sur la seconde extrémité (22) de l'organe de connexion (14) et la seconde face (19) de l'ébauche (11), par exemple à l'aide d'une patte d'encliquetage (27) portée par la seconde extrémité (22) et coopérant avec la seconde face (19) de l'ébauche (11).

13. Elément (10) pour pièce de carrosserie selon l'une quelconque des revendications 10 à 12, dans lequel la piste chauffante (12) est positionnée sur l'ébauche (11) en matière plastique selon une disposition compatible avec le passage d'ondes électromagnétiques à travers l'élément (10) en matière plastique, ces ondes étant destinées à être émises par un capteur (C) destiné à être monté au droit de l'élément (10).

14. Elément (10) pour pièce de carrosserie selon l'une quelconque des revendications 10 à 13, dans lequel la piste chauffante (12) comprend en outre une partie en serpentin (20s) de dégivrage.

15. Elément (10) pour pièce de carrosserie selon l'une quelconque des revendications 10 à 14, dans lequel la piste chauffante (12) comprend un matériau conducteur électriquement choisi parmi du cuivre, du tungstène ou un alliage comprenant du cuivre ou du tungstène.

16. Elément (10) pour pièce de carrosserie selon l'une quelconque des revendications 10 à 15, dans lequel la piste chauffante (12) est recouverte d'une couche d'isolant.

17. Elément (10) pour pièce de carrosserie selon la revendication 16, dans lequel l'isolant est choisi parmi de l'émail ou une peinture isolante.

18. Elément (10) pour pièce de carrosserie selon l'une quelconque des revendications 10 à 17, dans lequel la piste chauffante (12) est fixée sur la première face (16) de l'ébauche (11) par fusion locale de la matière plastique de l'ébauche (11).

## Patentansprüche

1. Verfahren zur Herstellung eines Elements (10) für ein Karosseriebauteil, wobei:
- ein Rohling (11) aus Kunststoff hergestellt wird, der wenigstens eine Aufnahme (15) umfasst, die sich auf einer ersten Fläche (16) des Rohlings (11) befindet, wobei die Aufnahme (15) wenigstens eine Öffnung (17) umfasst, die sich zwischen einem Boden (18) der Aufnahme (15) und einer zweiten Fläche (19) des Rohlings (11), die der ersten Fläche (16) gegenüberliegt, erstreckt,
- relativ zu dem Rohling (11) ein elektrisch leitendes Anschlussorgan (14) vor-positioniert wird, umfassend ein erstes Ende (21), das von der Seite der ersten Fläche (16) des Rohlings (11) her zugänglich ist, und ein zweites Ende (22), das sich durch die Öffnung (17) des Rohlings (11) hindurch so erstreckt, dass es von der zweiten Fläche (19) des Rohlings (11) her zugänglich ist,
- eine elektrisch leitende Heizbahn (12) auf der ersten Fläche (16) des Rohlings (11) positioniert wird, wobei die Heizbahn (12) einen Anschlussteil (20c) aufweist, der relativ zu dieser ersten Fläche (16) frei ist,
**dadurch gekennzeichnet, dass**:
- der Anschlussteil (20c) der Bahn (12) an dem ersten Ende (21) des Anschlussorgans (14) befestigt wird, indem wenigstens eine Windung des Anschlussteils (20c) der Bahn (12) um das erste Ende (21) des Anschlussorgans (14) herum gebildet wird,
- das erste Ende (21) des Anschlussorgans (14) und der Anschlussteil (20c) der Bahn (12) zusammengepresst werden,
- das erste Ende (21) des Anschlussorgans (14) und der Anschlussteil (20c) der Bahn (12) durch Zufuhr elektrischer Energie miteinander verschweißt werden,
- das erste Ende (21) des Anschlussorgans (14) in der Aufnahme (15) positioniert wird,
- eine zusätzliche Schicht (13) aus Kunststoff so auf die erste Fläche (16) des Rohlings (11) aufgeformt wird, dass sie die Heizbahn (12), das erste Ende (21) des Anschlussorgans (14), die Aufnahme (15) und die Öffnung (17) des Rohlings (11) bedeckt.

2. Verfahren zur Herstellung eines Elements (10) für ein Karosseriebauteil nach Anspruch 1, wobei die Schweißenergie über ein Werkzeug zum Zusammenpressen des ersten Endes (21) des Anschlussorgans (14) mit dem Anschlussteil (20c) der Bahn (12) zugeführt wird, wobei dieses Werkzeug bevorzugt im Schritt des Zusammenpressens verwendet wird.

3. Verfahren zur Herstellung eines Elements (10) für ein Karosseriebauteil nach einem der vorhergehenden Ansprüche, wobei das erste Ende (21) des elektrischen Anschlussorgans (14) von einer hakenförmig gebogenen Klaue gebildet ist, die einen Kern (23) umfasst, der einen ersten freien Schenkel (24) und einen zweiten Schenkel (25), der dazu bestimmt ist, mit dem Boden (18) der Aufnahme (15) in Kontakt zu sein, verbindet, und wobei das zweite Ende (22) des Anschlussorgans (14) von einem Fortsatz (26) des zweiten Schenkels (25) gebildet ist, der relativ zu dem zweiten Schenkel (25) gebogen ist.

4. Verfahren zur Herstellung eines Elements (10) für ein Karosseriebauteil nach einem der vorhergehenden Ansprüche, wobei die zusätzliche Schicht (13) aus Kunststoff die Heizbahn (12) vollständig bedeckt.

5. Verfahren zur Herstellung eines Elements (10) für ein Karosseriebauteil nach einem der vorhergehenden Ansprüche, wobei die Heizbahn (12) auf dem Rohling (11) aus Kunststoff gemäß einer Anordnung positioniert wird, die mit dem Durchtritt elektromagnetischer Wellen durch das Element (10) aus Kunststoff hindurch kompatibel ist, wobei diese Wellen dazu bestimmt sind, von einem Sensor (C) ausgesendet zu werden, der dazu bestimmt ist, rechtwinklig zu dem Element (10) montiert zu werden.

6. Verfahren zur Herstellung eines Elements (10) für ein Karosseriebauteil nach einem der vorhergehenden Ansprüche, wobei die Heizbahn (12) ferner einen serpentinenförmigen Enteisungsteil (20s) umfasst.

7. Verfahren zur Herstellung eines Elements (10) für ein Karosseriebauteil nach einem der vorhergehenden Ansprüche, wobei vor dem Schritt des Verschweißens eine Isolierschicht, die die Heizbahn (12) bedeckt, durch Zufuhr elektrischer Energie über ein Werkzeug zum Zusammenpressen des ersten Endes (21) des Anschlussorgans (14) mit dem Anschlussteil (20c) der Bahn (12) lokal zerstört wird, wobei das Werkzeug bevorzugt im Schritt des Zusammenpressens verwendet wird.

8. Verfahren zur Herstellung eines Elements (10) für ein Karosseriebauteil nach einem der vorhergehenden Ansprüche, wobei die Heizbahn (12) auf der ersten Fläche (16) des Rohlings (11) befestigt wird, indem sie durch Erhitzen der Bahn (12) auf eine Temperatur, die das lokale Abschmelzen des Kunststoffs des Rohlings (11) gestattet, verschweißt wird.

9. Verfahren zur Herstellung eines Elements (10) für ein Karosseriebauteil nach einem der vorhergehenden Ansprüche, wobei das Anschlussorgan (14) in der Aufnahme (15) in Position gehalten wird mit Hilfe von komplementären Einrastmitteln, die auf dem zweiten Ende (22) des Anschlussorgans (14) und der zweiten Fläche (19) des Rohlings (11) getragen werden, zum Beispiel mit Hilfe einer Einrastklaue (27), die von dem zweiten Ende (22) getragen wird und mit der zweiten Fläche (19) des Rohlings (11) zusammenwirkt.

10. Element (10) für ein Karosseriebauteil umfassend:
- einen Rohling (11) aus Kunststoff, der wenigstens eine Aufnahme (15) umfasst, die sich auf einer ersten Fläche (16) des Rohlings (11) befindet, wobei die Aufnahme (15) wenigstens eine Öffnung (17) umfasst, die sich zwischen einem Boden (18) der Aufnahme (15) und einer zweiten Fläche (19) des Rohlings (11), die der ersten Fläche (16) gegenüberliegt, erstreckt,
- eine elektrisch leitende Heizbahn (12), die auf der ersten Fläche (16) des Rohlings (11) positioniert ist, wobei die Heizbahn (12) einen Anschlussteil (20c) umfasst,
**dadurch gekennzeichnet, dass** es ferner umfasst:
- ein elektrisch leitendes Anschlussorgan (14), umfassend ein erstes Ende (21), das in der Aufnahme (15) des Rohlings (11) positioniert ist, und ein zweites Ende (22), das sich durch die Öffnung (15) des Rohlings (11) hindurch so erstreckt, dass es von der zweiten Fläche (19) des Rohlings (11) her zugänglich ist, wobei der Anschlussteil (20c) der Heizbahn (12) an dem ersten Ende (21) des Anschlussorgans (14) befestigt ist, indem wenigstens eine Windung des Anschlussteils (20c) der Bahn (12) um das erste Ende (21) des Anschlussorgans (14) herum gebildet ist, wobei das erste Ende (21) und der Anschlussteil (20c) der Bahn (12) zusammengepresst miteinander verschweißt sind,
- eine zusätzliche Schicht (13) aus Kunststoff, die auf die erste Fläche (16) des Rohlings (11) aufgeformt ist, wobei sie die Heizbahn (12), das erste Ende (21) des Anschlussorgans (14), die Aufnahme (15) und die Öffnung (17) des Rohlings (11) bedeckt.

11. Element (10) für ein Karosseriebauteil nach Anspruch 10, wobei das erste Ende (21) des elektrischen Anschlussorgans (14) von einer hakenförmig gebogenen Klaue gebildet ist, die einen Kern (23) umfasst, der einen ersten freien Schenkel (24) und einen zweiten Schenkel (25), der dazu bestimmt ist, mit dem Boden (18) der Aufnahme (15) in Kontakt zu sein, verbindet, und wobei das zweite Ende (22) des Anschlussorgans (14) von einem Fortsatz (26) des zweiten Schenkels (25) gebildet ist, der relativ zu dem zweiten Schenkel (25) gebogen ist.

12. Element (10) für ein Karosseriebauteil nach einem der Ansprüche 10 bis 11, wobei das Anschlussorgan (14) in der Aufnahme (15) in Position gehalten ist mit Hilfe von komplementären Einrastmitteln, die auf dem zweiten Ende (22) des Anschlussorgans (14) und der zweiten Fläche (19) des Rohlings (11) getragen werden, zum Beispiel mit Hilfe einer Einrastklaue (27), die von dem zweiten Ende (22) getragen wird und mit der zweiten Fläche (19) des Rohlings (11) zusammenwirkt.

13. Element (10) für ein Karosseriebauteil nach einem der Ansprüche 10 bis 12, wobei die Heizbahn (12) auf dem Rohling (11) aus Kunststoff gemäß einer Anordnung positioniert ist, die mit dem Durchtritt elektromagnetischer Wellen durch das Element (10) aus Kunststoff hindurch kompatibel ist, wobei diese Wellen dazu bestimmt sind, von einem Sensor (C) ausgesendet zu werden, der dazu bestimmt ist, rechtwinklig zu dem Element (10) montiert zu werden.

14. Element (10) für ein Karosseriebauteil nach einem der Ansprüche 10 bis 13, wobei die Heizbahn (12) ferner einen serpentinenförmigen Enteisungsteil (20s) umfasst.

15. Element (10) für ein Karosseriebauteil nach einem der Ansprüche 10 bis 14, wobei die Heizbahn (12) ein elektrisch leitendes Material umfasst, das ausgewählt ist aus Kupfer, Wolfram oder einer Legierung, die Kupfer oder Wolfram enthält.

16. Element (10) für ein Karosseriebauteil nach einem der Ansprüche 10 bis 15, wobei die Heizbahn (12) mit einer Isolierschicht bedeckt ist.

17. Element (10) für ein Karosseriebauteil nach Anspruch 16, wobei das Isoliermaterial ausgewählt ist aus Email oder einem Isolierlack.

18. Element (10) für ein Karosseriebauteil nach einem der Ansprüche 10 bis 17, wobei die Heizbahn (12) auf der ersten Fläche (16) des Rohlings (11) durch lokales Abschmelzen des Kunststoffs des Rohlings (11) befestigt ist.

## Claims

1. Method for manufacturing an element (10) for a bodywork component, wherein :
- a rough form (11) made of plastic and comprising at least one housing (15) on a first face (16) of the rough form (11), said housing (15) comprising at least one orifice (17) extending between a bottom (18) of the housing (15) and a second face (19) of the rough form (11) opposite the first face (16) is manufactured,
- an electrically conductive connection member (14) comprising a first end (21) accessible from the side of the first face (16) of the rough form (11) and a second end (22) extending through the orifice (17) in the rough form (11) so as to be accessible from the side of the second face (19) of the rough form (11) is pre-positioned with respect to the rough form (11),
- an electrically conductive heating track (12) is positioned on the first face (16) of the rough form (11), the heating track (12) comprising a connection part (20c) which is free with respect to this first face (16),
**characterized in that**:
- the connection part (20c) of the track (12) is affixed to the first end (21) of the connection member (14) by forming at least one coil of the connection part (20c) of the track (12) around the first end (21) of the connection member (14),
- the first end (21) of the connection member (14) and the connection part (20c) of the track (12) are squeezed together,
- the first end (21) of the connection member (14) and the connection part (20c) of the track (12) are welded together by the input of electrical energy,
- the first end (21) of the connection member (14) is positioned in the housing (15),
- an additional layer (13) of plastic is overmolded on the first face (16) of the rough form (11) so as to cover the heating track (12), the first end (21) of the connection member (14), the housing (15) and the orifice (17) in the rough form (11).

2. Method for manufacturing an element (10) for a bodywork component according to claim 1, wherein the welding energy is supplied via a tool squeezing the first end (21) of the connection member (14) with the connection part (20c) of the track (12), this tool preferably being used in the squeezing step.

3. Method for manufacturing an element (10) for a bodywork component according to any one of the preceding claims, wherein the first end (21) of the electrical connection member (14) is formed by a tab bent in a hook shape comprising a web (23) connecting a first free branch (24) and a second branch (25) intended to be in contact with the bottom (18) of the housing (15), and wherein the second end (22) of the connection member (14) is formed by an extension (26) of the second leg (25), bent with respect to the second leg (25).

4. Method for manufacturing an element (10) for a bodywork component according to any one of the preceding claims, wherein the additional layer (13) of plastic completely covers the heating track (12).

5. Method for manufacturing an element (10) for a bodywork component according to any one of the preceding claims, wherein the heating track (12) is positioned on the plastic rough form (11) in an arrangement compatible with the passage of electromagnetic waves through the plastic element (10), these waves being intended to be emitted by a sensor (C) intended to be mounted perpendicularly to the element (10).

6. Method for manufacturing an element (10) for a bodywork component according to any one of the preceding claims, wherein the heating track (12) further comprises a serpentine deicing portion (20s).

7. Method for manufacturing an element (10) for a bodywork component according to any one of the preceding claims, wherein, prior to the welding step, a layer of insulation covering the heating track (12) is locally destroyed by inputting electrical energy via a tool squeezing the first end (21) of the connection member (14) with the connection part (20c) of the track (12), preferably used in the squeezing step.

8. Method for manufacturing an element (10) for a bodywork component according to any one of the preceding claims, wherein the heating track (12) is fixed on the first face (16) of the rough form (11) by welding by heating the track (12) to a temperature allowing local melting of the plastic of the rough form (11).

9. Method for manufacturing an element (10) for a bodywork component according to any one of the preceding claims, wherein the connection member (14) is held in position in the housing (15) with the aid of complementary snap-in means carried on the second end (22) of the connection member (14) and the second face (19) of the rough form (11), for example by means of a snap-in tab (27) carried by the second end (22) and cooperating with the second face (19) of the rough form (11).

10. Element (10) for a bodywork component, comprising:
- a rough form (11) made of plastic and comprising at least one housing (15) on a first face (16) of the rough form (11), said housing (15) comprising at least one orifice (17) extending between a bottom (18) of the housing (15) and a second face (19) of the rough form (11) opposite the first face (16),
- an electrically conductive heating track (12) positioned on the first face (16) of the rough form (11), the heating track (12) comprising a connection part (20c),
**characterized in that** it also comprises :
- an electrically conductive connection member (14) comprising a first end (21) positioned in the housing (15) of the rough form (11) and a second end (22) extending through the orifice (15) in the rough form (11) so as to be accessible from the side of the second face (19) of the rough form (11), the connection part (20c) of the heating track (12) being affixed to the first end (21) of the connection member (14), by forming at least one coil of the connection part (20c) of the track (12) around the first end (21) of the connection member (14), the first end (21) and the connection part (20c) of the track (12) being squeezed and welded together,
- an additional layer (13) of plastic, overmolded on the first face (16) of the rough form (11), covering the heating track (12), the first end (21) of the connection member (14), the housing (15) and the orifice (17) of the rough form (11).

11. Element (10) for a bodywork component according to claim 10, wherein the first end (21) of the electrical connection member (14) is formed by a tab bent in a hook shape comprising a web (23) connecting a first free branch (24) and a second branch (25) intended to be in contact with the bottom (18) of the housing (15), and wherein the second end (22) of the connection member (14) is formed by an extension (26) of the second leg (25), bent with respect to the second leg (25).

12. Element (10) for a bodywork component according to any one of claims 10 to 11, wherein the connection member (14) is held in position in the housing (15) by means of complementary snap-in means carried on the second end (22) of the connection member (14) and the second face (19) of the rough form (11), for example by means of a snap-in tab (27) carried by the second end (22) and cooperating with the second face (19) of the rough form (11).

13. Element (10) for a bodywork component according to any one of claims 10 to 12, wherein the heating track (12) is positioned on the plastic rough form (11) in an arrangement compatible with the passage of electromagnetic waves through the plastic element (10), which waves are to be emitted from a sensor (C) to be perpendicularly mounted on the element (10).

14. Element (10) for a bodywork component according to any one of claims 10 to 13, wherein the heating track (12) further comprises a serpentine deicing portion (20s).

15. Element (10) for a bodywork component according to any one of claims 10 to 14, wherein the heating track (12) comprises an electrically conductive material selected from copper, tungsten or an alloy comprising copper or tungsten.

16. Element (10) for a bodywork component according to any one of claims 10 to 15, wherein the heating track (12) is covered with an insulating layer.

17. Element (10) for a bodywork component according to claim 16, wherein the insulation is selected from enamel or insulating paint.

18. Element (10) for a bodywork component according to any one of claims 10 to 17, wherein the heating track (12) is fixed on the first face (16) of the rough form (11) by local melting of the plastic of the rough form (11).
